# EUROPÄISCHE PATENTANMELDUNG

(11) **EP 2 006 646 A1**
(43) Veröffentlichungstag der Anmeldung: **24.12.2008**
(21) Anmeldenummer: 07122830.8
(22) Anmeldetag: 11.12.2007
(51) Int. Cl.: G01F 1/66

(54) **Ultraschalldurchflussmesser auf einem austauschbaren Einsatz und Verfahren zum Rekalibrieren**

(30) Priorität: 20.06.2007 DE 102007028431
(71) Anmelder: SICK Engineering GmbH, 01458 Ottendorf-Okrilla (DE)
(72) Erfinder: Ehrlich, Dr. Andreas, 01129, Dresden (DE); Billep, Dr. Detlef, 09224, Chemnitz (DE); Schröter, Gerry, 01239, Dresden (DE)
(74) Vertreter: Hehl, Ulrich

(57) **Zusammenfassung**

Es wird eine Messvorrichtung (10) mit mindestens zwei in einer Rohrleitung (12), insbesondere in der Nähe der Wandung der Rohrleitung (12), derart angeordneten Ultraschallwandlern (26) angegeben, dass im Betrieb der von den beiden Ultraschallwandlern (26) ausgesandte und empfangene Ultraschall eine von der Strömungsgeschwindigkeit und/oder dem Durchfluss eines in der Rohrleitung (12) strömenden Fluids (14) abhängige Laufzeitdifferenz aufweist. Dabei sind die Ultraschallwandler (26) an einem Einsatz (20) vorgesehen, welcher in die Rohrleitung (12) in eine Betriebsposition einführbar und aus dieser entfernbar ist. Es wird außerdem ein Verfahren zum Rekalibrieren einer Messvorrichtung (10) angegeben.

## Beschreibung

Die Erfindung betrifft eine Messvorrichtung mit mindestens zwei Ultraschallwandlern nach dem Oberbegriff von Anspruch 1 und ein Verfahren zum Rekalibrieren einer Messvorrichtung nach dem Oberbegriff von Anspruch 11.

Es ist bekannt, mit Hilfe von Ultraschallwandlern die Strömungsgeschwindigkeit eines Fluids in einer Rohrleitung und daraus den Durchfluss zu bestimmen. Dazu wird Ultraschall mit und gegen die Strömung ausgesandt und die jeweilige Laufzeit ermittelt. Aus den Laufzeitdifferenzen lässt sich die Strömungsgeschwindigkeit auf einfachem trigonometrischem Wege berechnen.

Herkömmlich werden auf Ultraschallwandlern basierende Messvorrichtungen in einem eigenen Rohrleitungsabschnitt montiert und für den Betrieb in die bestehende, ein Fluid führende Rohrleitung eingebaut. Bei all diesen herkömmlichen Ultraschallzählern sind die Messsonden in das drucktragende Gehäuse eingelassen, bilden also einen integralen Bestandteil des Gehäuses.

Fällt die Messvorrichtung aus oder soll sonst eine Wartung vorgenommen werden, so muss der Rohrleitungsabschnitt aus- und nach Abschluss der Arbeiten wieder eingebaut werden. Da Gaszähler regelmäßigen Rekalibrierungszyklen unterliegen, ist eine derartige Wartung entsprechend häufig notwendig. Dabei ist die Kalibrierung in einem besonderen Hochdruckprüfstand vorzunehmen, der keineswegs in örtlicher Nähe zu dem Betriebsort liegen muss. Jedes Mal muss der komplette Zähler einschließlich des drucktragenden Gehäuses aus der Leitung ausgebaut, eingeschickt und danach wieder eingebaut werden. Ein zwischenzeitlicher Betrieb ist nur möglich, wenn ein eigens für den Einsatzort kalibriertes Ersatzteil eingebaut wird.

Aus der EP 1 693 652 A2 ist ein Durchflussmesser für flüssige oder gasförmige Medien in einem von dem Medium durchströmten Messkanal bekannt, der eine Strömungsleitplatte als Halteplatte für ein Reflektorpaar aufweist. Dabei wird Ultraschall jeweils auf einen der Reflektoren gestrahlt und durch den derart gewählten Reflektor gezielt mit oder gegen die Strömung gelenkt. Die Halteplatte dient demnach gleichzeitig einer gezielten Beeinflussung der Strömung und der Halterung der Reflektoren. Dieses Prinzip ändert aber nichts daran, dass der Durchflussmesser zu Wartungszwecken, wie bei einer erneuten Kalibrierung, als Ganzes ausgebaut werden muss, da die Messsonden weiterhin in das Gehäuse integriert sind.

Für mechanisch arbeitende Turbinenradzähler sind Patroneneinsätze bekannt, bei denen das eigentliche Zählwerk vom Gehäuse getrennt ist und separat gewechselt werden kann. Dazu muss eine Kopplung zwischen dem Einschub mit dem Turbinenrad und dem Zählwerk geschaffen werden, das außerhalb des Gehäuses, also außerhalb der Rohrleitung, angeordnet ist. Die mechanische Messweise der Turbinenradzähler hat den Nachteil, dass bewegte und damit stör- und verschleißanfällige Teile direkt in der Strömung angeordnet sind. Weiterhin fehlen dem Turbinenradzähler die diagnostischen Eigenschaften, welche im Ultraschallzähler durch die Beobachtung zusätzlicher Messgrößen gewonnen werden können.

Es ist daher Aufgabe der Erfindung, ein leichter zu wartendes Ultraschall-Messsystem anzugeben.

Diese Aufgabe wird durch eine Messvorrichtung gemäß Anspruch 1 und ein Verfahren zum Rekalibrieren gemäß Anspruch 11 gelöst. Indem die Ultraschallwandler auf einem austauschbaren Einsatz vorgesehen sind, erfordern Wartungsarbeiten nicht mehr den Austausch eines ganzen Rohrabschnitts und können damit wesentlich unaufwändiger, schneller und kostengünstiger vorgenommen werden. Im Rekalibrierungsfall muss nicht mehr der gesamte Zähler ausgetauscht werden. Damit werden aufwändige Servicearbeiten vermieden, welche das Lösen der Flanschverbindung, die Verwendung von Hebezeugen, den Transport zum Hochdruckprüfstand, den Wiedereinbau sowie die damit verbundenen Ausfallzeiten für Transport und Prüfung oder die Kosten für einen Ersatzzähler einschließen.

Die Erfindung basiert damit auf dem Grundgedanken, ein möglichst modulares, auf Ultraschall basierendes Messkonzept umzusetzen. Der Einsatz ist separat konfigurierbar und kostengünstig zu fertigen. Dem Anwender kann ein bereits kalibrierter Einsatz als preiswerter Ersatz zur Verfügung gestellt und rasch ohne nennenswerte Ausfallzeiten eingebaut werden.

Bevorzugt ist ein gegen den Fluiddruck beständiges Gehäuse als Abschnitt der Rohrleitung vorgesehen, welches dafür ausgebildet ist, den Einsatz in der Betriebsposition zu halten, wobei die Messvorrichtung insbesondere einen mit dem Gehäuse oder dem Einsatz verbundenen Strömungsgleichrichter aufweist. Die Messvorrichtung wird auf diese Weise in eine bestehende Rohrleitung integriert, wobei die mechanischen Halterungen für den Einsatz bereits vorgesehen sind und somit einen besonders schnellen Austausch ermöglichen. Da das Gehäuse diese auf den Einsatz abgestimmten mechanischen Halterungen aufweist, bleibt der Einsatz stabil in seiner Betriebsposition. Ein Strömungsgleichrichter ist für die Messung mittels Ultraschall hilfreich, weil mit diesem Messverfahren die Strömungsgeschwindigkeit und aus dieser indirekt der Durchfluss ermittelt wird. Die Genauigkeit der Durchflussmessung hängt somit von einer möglichst reproduzierbaren Strömungssituation ab, welche mit einem Strömungsgleichrichter erreicht oder verbessert werden kann. Strömungsgleichrichter verbessern im Besonderen die Messgenauigkeit bei einer Messung mit nur einem oder wenigen Paaren von Ultraschallzählern, denn eine größere Anzahl von Ultraschallzählern kann auch ein inhomogenes Strömungsbild genauer auswerten.

Weiter ist bevorzugt eine Schaltwelle vorgesehen, mittels derer der Einsatz und/oder ein den Einsatz umgebendes Einsatzgehäuse drehbar in der Rohrleitung gelagert werden kann, wobei der Einsatz durch Einbeziehung einer Drehung in die Betriebsposition einführbar und aus dieser entfernbar ist. Damit lässt sich der Einsatz besonders einfach aus- und einbauen.

Vorteilhafterweise weist das Gehäuse einen T-Stutzen auf, und der Einsatz und/oder das Einsatzgehäuse weist an seiner Außenkontur Teile einer Kugelfläche auf oder ist im Wesentlichen kugelförmig. Damit kann der Einsatz durch den T-Stutzen eingeführt und aufgrund seiner Form in einfacher Weise in die Betriebsposition gebracht werden.

Besonders bevorzugt weist der T-Stutzen ein Absperrorgan zum Halten des Drucks in der Rohrleitung bei geöffnetem T-Stutzen auf, oder der Einsatz ist dafür ausgebildet, die Rohrleitung abzusperren. Dann kann nämlich ein Austausch ohne Entlastung der Rohrleitung erfolgen, die also weder gesondert abgesperrt werden noch nach erfolgtem Austausch erneut auf Dichtigkeit getestet werden muss.

Vorteilhafterweise ist ein insbesondere nichtflüchtiger Speicher vorgesehen, um die Messdaten aufzuzeichnen, wobei dieser Speicher insbesondere als ein von außen austauschbares Modul ausgebildet ist. Damit gehen die ermittelten Messdaten nicht verloren und können mittels des Speichermoduls zur weiteren Auswertung in ein externes Gerät übertragen werden.

Bevorzugt ist eine Schnittstelle vorgesehen, um Daten aus dem Einsatz nach außen und/oder um Ansteuerungssignale zu den Ultraschallwandlern zu führen, wobei die Schnittstelle drahtgebunden, insbesondere eine serielle oder eine Ethernet-Schnittstelle, eine drahtlose Funkschnittstelle insbesondere nach einem Mobilfunkstandard, dem WLAN- oder Bluetooth-Standard, eine induktive, eine optische oder eine kapazitive Schnittstelle ist. Damit können die Messdaten in einer dem Fluid und der jeweiligen Anwendung angepassten Weise nach außen übertragen und dort weiterverarbeitet werden. Umgekehrt ist möglich, die Ultraschallwandler von außen anzusteuern und damit beispielsweise in ein Steuerungssystem zu integrieren.

Vorteilhafterweise ist eine Auswertungseinheit vorgesehen, welche dafür ausgebildet ist, aus den Laufzeitdifferenzen die Strömungsgeschwindigkeit und/oder den Durchfluss des Fluids zu ermitteln. Die Messvorrichtung liefert also nicht nur Rohdaten für die Laufzeitdifferenzbestimmung, sondern unmittelbar die eigentlich angestrebten Durchfluss- oder Geschwindigkeitsdaten.

Dabei weist bevorzugt der Einsatz die Auswertungseinheit auf, und die Schnittstelle ist dafür ausgebildet, Strömungsgeschwindigkeiten und/oder Durchflussdaten nach außen zu übertragen, oder die Auswertungseinheit ist außerhalb der Rohrleitung vorgesehen und die Schnittstelle dafür ausgebildet, Rohdaten der Ultraschallwandler an die Auswertungseinheit zu übertragen. Je nach Anwendung kann also die Elektronik in dem Einsatz zur schnellen, energie- und platzsparenden Ausführung schlank gehalten und nur für die Weitergabe von Rohdaten vorgesehen sein oder in besonders anwender- und weiterverarbeitungsfreundlicher Weise auch für die Aufbereitung der Daten ausgelegt sein.

Bevorzugt weist das Gehäuse eine drahtlose, insbesondere induktive Stromversorgung für den Einsatz beziehungsweise dessen Ultraschallwandler, Schnittstelle und/oder Auswertungseinheit auf. Ein Akku oder eine Batterie für den Messeinsatz wird dann nicht mehr benötigt. Dies verlängert die Wartungszyklen und macht den Einsatz weniger reparaturanfällig.

Nach dem erfindungsgemäßen Verfahren zum Rekalibrieren ist es nicht mehr notwendig, das Stück Rohrleitung mit der Messvorrichtung für eine Wartung oder eine Rekalibrierung aus- und wieder einzubauen. Es genügt, den Einsatz herauszunehmen und wieder einzusetzen.

Dabei wird bevorzugt der zu kalibrierende Messeinsatz durch einen zweiten vorab außerhalb der Rohrleitung kalibrierten Messeinsatz ausgetauscht. Für den Benutzer kann das Rekalibrieren damit praktisch ohne Ausfallzeit vorgenommen werden. Die für ein Rekalibrieren notwendige Zeit kann nämlich vorab für die Kalibrierung des Ersatz-Einsatzes aufgewendet werden.

Vorteilhafterweise wird der kalibrierte Messeinsatz in axialer Richtung nach Ausbau eines Rohrleitungsabschnittes oder mit radialer Richtungskomponente ohne Ausbau eines Rohrleitungsabschnittes über einen verschließbaren Stutzen eingeführt. Der Ausbau bei Einführung in axialer Richtung beschränkt sich möglicherweise auf eine Öffnung an nur einer Stelle im Gegensatz zu mindestens zwei zu öffnenden Flanschverbindungen bei dem vollständigen Ausbau einer Messvorrichtung nach dem Stand der Technik. Sieht man gemäß dieser Ausführungsform aber einen verschließbaren Stutzen vor, so ist gar kein Ausbau mehr erforderlich, sondern nur ein Öffnen und Schließen des Stutzens. Der Austausch ist damit schnell und einfach vorgenommen.

Bevorzugt wird dabei der Einsatz über eine Schaltwelle durch Einbeziehung einer Drehung in die Betriebsposition eingeführt, entfernt und/oder ausgetauscht, wobei der Einsatz selbst drehbar gelagert ist oder in ein drehbar gelagertes Einsatzgehäuse des Rohrleitungsabschnitts eingesetzt wird. Die Rekalibrierung kann damit besonders einfach erfolgen, weil der Austausch des Einsatzes sehr einfach möglich ist.

Noch bevorzugter wird der Austausch ohne Entlastung der Rohrleitung vorgenommen, indem der Einsatz oder ein Absperrorgan des Rohrleitungsabschnitts während des Austauschs den Druck aufrecht erhält. Hierdurch wird der Austausch ganz erheblich vereinfacht, und es entfällt ein anschließender Dichtigkeitstest.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1a: eine vereinfachte Längsschnittdarstellung einer Ausführungsform der Erfindung mit einem rohrförmigen Einsatz;
- Fig. 1b: eine vereinfachte Querschnittdarstellung der Ausführungsform gemäß Figur 1a;
- Fig. 2a: eine vereinfachte Längsschnittdarstellung einer weiteren Ausführungsform der Erfindung mit einem Einsatz, welcher zugleich ein Strömungsgleichrichter ist;
- Fig. 2b: eine vereinfachte Querschnittdarstellung der Ausführungsform gemäß Figur 2a;
- Fig. 3: eine Schnittdarstellung einer weiteren Ausführungsform mit einem drehbar gelagerten Einsatz; und
- Fig. 4: ein Blockschaltbild der elektronischen Funktionseinheiten der Erfindung.

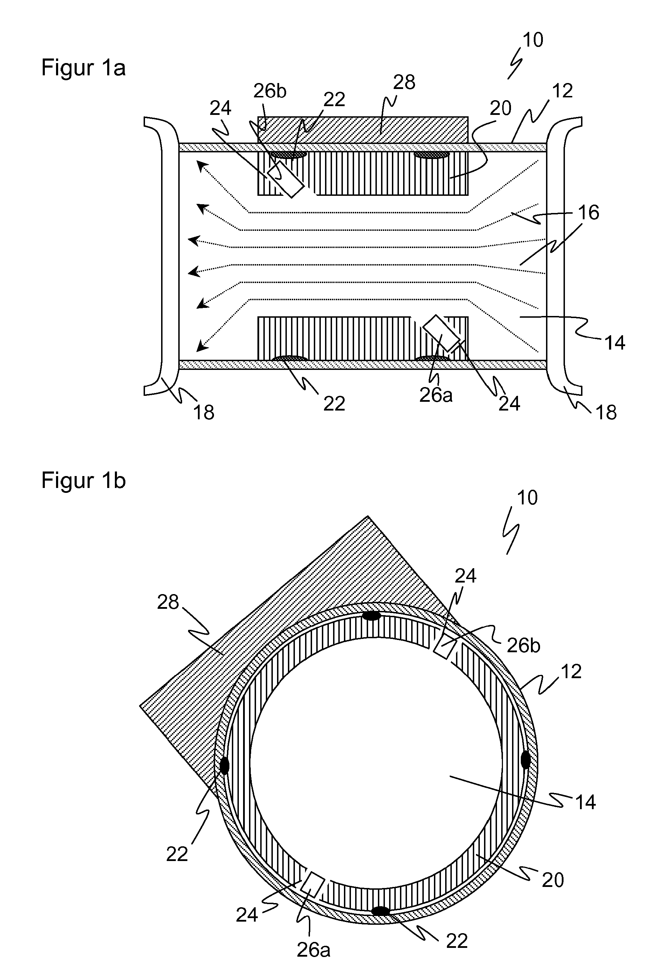

Figur 1a zeigt einen Längsschnitt und Figur 1b einen Querschnitt durch eine erste Ausführungsform einer erfindungsgemäßen Messvorrichtung 10. In einer Rohrleitung 12 strömt ein Fluid 14 in der durch Pfeile 16 angedeuteten Richtung. Bei dem Fluid kann es sich um ein beliebiges Glas oder eine beliebige Flüssigkeit handeln, deren Strömungsgeschwindigkeit oder Durchfluss gemessen werden sollen. Eine spezielle Anwendung ist die Messung von Erdgas, um die geförderte oder die abgegebene Menge Erdgas für Steuerungszwecke oder zur Abrechnung zu kennen. Die Rohrleitung 12 ist druckfest ausgelegt, es kann also auch bei hohem Druck kein Fluid nach außen entweichen. Der dargestellte Abschnitt der Rohrleitung, welcher der Messvorrichtung 10 entspricht, kann durch eine dichte Flanschverbindung 18 in eine bestehende Rohrleitung eingebaut werden.

In der Rohrleitung 12 befindet sich ein Einsatz 20, der von mechanischen Befestigungseinrichtungen 22 positionsfest in der Rohrleitung 12 gehaltert wird. Diese mechanischen Befestigungseinrichtungen 22 können nahezu beliebig ausgestaltet sein, als Schraubverbindung, Clipverbindung, Eingriff eines Vorsprungs in einer Sacknut gegen die Strömungsrichtung und dergleichen, solange nur gewährleistet ist, dass die Position des Einsatzes 20 von dem strömenden Fluid 14 nach Schließen der mechanischen Befestigungseinrichtungen 22 nicht mehr verändert werden kann.

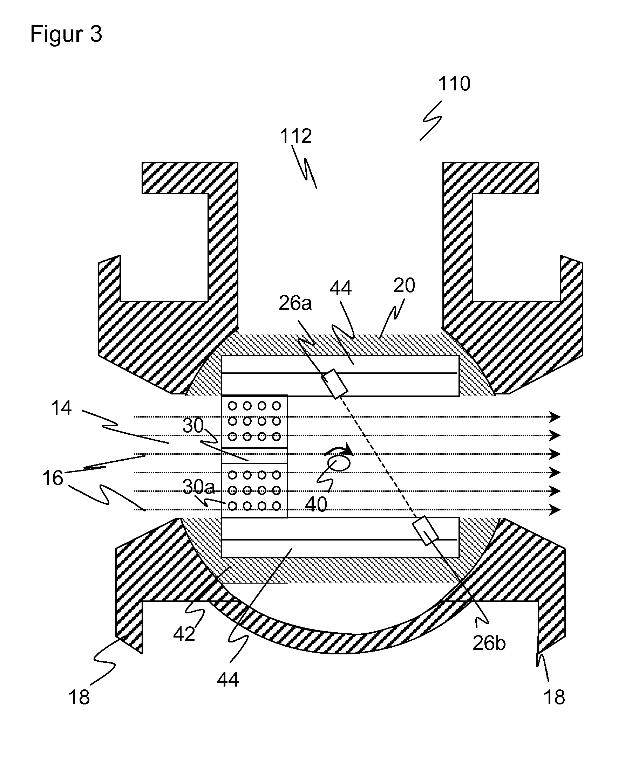

In Öffnungen 24 des Einsatzes 20 ist ein Paar Ultraschallwandler 26 vorgesehen, welches mit einem Winkel gegenüber der radialen Richtung der Rohrleitung 12 zueinander ausgerichtet ist. Somit wird Ultraschall, der von dem stromaufwärts gelegenen ersten Ultraschallwandler 26a ausgesandt wird, von dem strömenden Fluid 14 mitgenommen und erreicht den stromabwärts gegenüber gelegenen zweiten Ultraschallwandler 26b schneller als in der Gegenrichtung ausgesandter Ultraschall, der sich gegen das strömende Fluid 14 ausbreitet. Aus der Differenz der Laufzeit auf dem Ultraschallweg mit dem Strom von dem ersten Ultraschallwandler 26a zu dem zweiten Ultraschallwandler 26b gegenüber der Laufzeit auf dem Ultraschallweg gegen den Strom von dem zweiten Ultraschallwandler 26b zu dem ersten Ultraschallwandler 26a kann die im Zusammenhang mit Figur 3 erläuterte Steuerung die Strömungsgeschwindigkeit des Fluids 14 und daraus den Durchfluss ermitteln.

Der Einsatz 20 mit den Ultraschallwandlern 26 kann durch Lösen der mechanischen Befestigungseinrichtungen 22 aus der Rohrleitung 12 entnommen und in diese eingesetzt werden. Dazu wird entweder die Flanschverbindung 18 gelöst, ein Abschnitt der Rohrleitung 12 somit ausgebaut, der Einsatz 20 in axialer Richtung eingeschoben und der Abschnitt der Rohrleitung anschließend mittels der Flanschverbindung 18 wieder eingebaut. Bei dieser Vorgehensweise ist es also immer noch nötig, das Fluid 14 zuvor aus der Rohrleitung 12 zu entfernen und einen Abschnitt aus der Rohrleitung 12 auszubauen.

Alternativ ist ein verschließbarer Stutzen 28 vorgesehen, durch den der Einsatz 20 in radialer Richtung oder, bei einem schrägen Stutzen 28, mit radialer Richtungskomponente in die Rohrleitung 12 eingebaut wird. In diesem Fall genügt es, den Zustrom an Fluid 14 während des Umbaus abzuschalten. Mittels einer Art Druckschleuse in dem verschließbaren Stutzen 28 kann das Fluid 14 in der Rohrleitung 12 verbleiben. Es ist auch möglich, den Strom mit einer Schleuse zu unterbinden, um den Austausch vorzunehmen.

Erfindungsgemäß werden also Messfunktion des Einsatzes 20 und Aufnahmefunktion durch das Gehäuse, also den Rohrabschnitt 12, konsequent getrennt. Das Gehäuse dient nur noch als haltendes Bauteil für die Positionierung des Einsatzes 20 im Strömungskanal und um den Druck zu tragen. Der Einsatz 20 dagegen übernimmt alle Funktionen, die für die eigentliche Messung erforderlich sind, indem er die Ultraschallwandler 26 trägt, die geometrischen Parameter wie den Sondenabstand, den Messwinkel und den Strömungsgleichrichter festlegt und die Kontakte zur elektrischen Ansteuerung der Sonden und zur Übertragung der Messdaten aufnimmt, die später im Zusammenhang mit Figur 3 noch erläutert wird.

Damit werden Wartungsarbeiten vereinfacht, insbesondere ein zyklisch anfallendes Rekalibrieren der Messvorrichtung 10. Dazu kann nämlich der Messeinsatz 20 aus der Rohrleitung 12 wie beschrieben entfernt und bei nach wie vor intakter Rohrleitung 12 außerhalb kalibriert werden. Vor allem aber ist es möglich, einen bereits vorkalibrierten zweiten Messeinsatz 20 zu verwenden, der vor Ort gegen den zu kalibrierenden Messeinsatz 20 ausgetauscht wird. Da der Messeinsatz 20 das Strömungsprofil selbst festlegt, in der dargestellten Ausführungsform beispielsweise durch eine Verjüngung des Rohrquerschnitts, hängt das Strömungsverhalten nämlich nur noch von dem Messeinsatz 20 und nicht mehr von der Rohrleitung 12 ab. Somit kann immer eine Reihe von vorkalibrierten Messeinsätzen 20 vorgehalten und bei Bedarf an unterschiedlichen Einsatzorten zum Austausch bei der Kalibrierung eingesetzt werden. Das Rekalibrieren wird erheblich kostengünstiger und fordert deutlich verkürzte Ausfallzeiten.

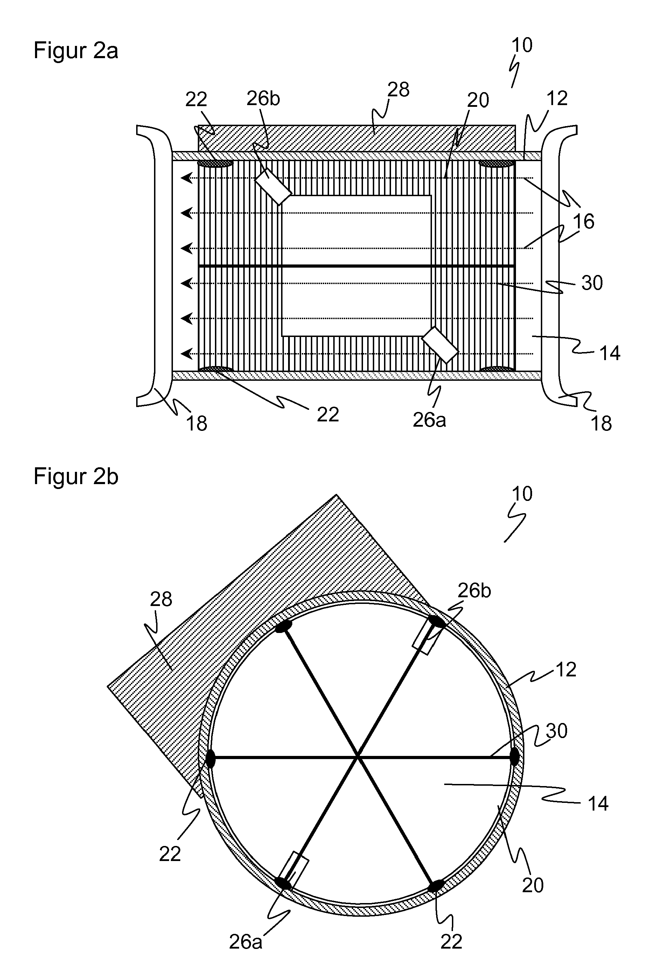

Figur 2 zeigt eine weitere Ausführungsform der Erfindung, nämlich in Figur 2a im Längsschnitt und in Figur 2b im Querschnitt. Dabei bezeichnen gleiche Bezugszeichen hier und im Folgenden die gleichen Merkmale wie in der Figur 1. Diese Ausführungsform unterscheidet sich von der ersten Ausführungsform darin, dass die Ultraschallwandler 26 nicht in einen zylinderförmigen Einsatz 20, sondern auf einer zu einem Stern angeordneten Mehrzahl von hier beispielhaft als Platten ausgebildeten Strömungsgleichrichtern 30 angebracht sind. Die dargestellte sternförmige Anordnung von Strömungsgleichrichtern 30 ist an sich bekannt, und es können alternativ auch andere Ausgestaltungen eines Strömungsgleichrichters verwendet werden. Es ist für Ultraschallzähler relativ wichtig, für eine gleichmäßige Strömung zu sorgen, da der Durchfluss indirekt aus der Geschwindigkeit berechnet wird und Turbulenzen somit Messfehler erzeugen. Bei der Ausgestaltung gemäß der soeben vorgestellten zweiten Ausführungsform sorgt der Messeinsatz 20 selbst für zumindest einigermaßen gleichmäßige Strömungsverhältnisse. Allerdings befinden sich die Ultraschallwandler 26 in diesem Fall im Strömungskanal und müssen entsprechend robust sein und sorgen auch ihrerseits für eine gewisse Turbulenz.

Abweichend von dem im letzten Absatz Gesagten und dem in Figur 2 dargestellten Strömungsgleichrichter 30 sind auch andere Strömungsgleichrichter denkbar, die nicht sternförmig angeordnet sind. Hier kommt es nur darauf an, dass der Strömungsgleichrichter die Strömung homogener macht, nicht auf seinen speziellen Aufbau.

Auch ist bei allen Ausführungsformen als Messpfad für den Ultraschallzähler nicht nur der volle Durchmesser oder, im Falle mehrerer Ultraschallzählerpaare, sich sternförmig schneidender Ultraschallpfade denkbar, sondern beliebige andere Konfigurationen. Beispielsweise können zwei oder mehr Ultraschallpfade parallel zueinander liegen und dabei nur Segmente statt des vollen Durchmessers überstreichen.

Daher ist als eine weitere Ausführungsform eine Mischform vorgesehen, bei welcher der Strömungsgleichrichter 30 fest verbundener Teil des Gehäuses ist und die Ultraschallwandler 26 wie bei der ersten Ausführungsform in Öffnungen 24 eines zylinderförmigen Einsatzes 20 vorgesehen sind.

In Figur 3 ist eine weitere Ausführungsform mit einem drehbar gelagerten Einsatz 20 dargestellt. Hier ist der Rohrleitungsabschnitt für den Einsatz 20 als T-Stück 110 ausgeführt. Ein Strömungsgleichrichter 30 vergleichmäßigt den Strom des Fluids 14 in Richtung der Pfeile 16. Dabei sind Löcher 30a zur Verbesserung der Gleichrichtereigenschaften vorgesehen. Denkbar ist aber auch, andere Strömungsgleichrichter einzusetzen oder gegebenenfalls auch auf sie zu verzichten.

Der Einsatz 20 ist über eine Schaltwelle 40 senkrecht zur Rohrleitungsachse drehbar gelagert. Dabei ist die Drehachse so orientiert, dass der Einsatz 20 zwischen einer achsparallelen Betriebsposition, in der das Fluid 14 den Einsatz 20 durchströmt, und einer senkrechten Entnahmeposition drehbar ist, in der die flachen Bereiche 42 des Einsatzes bündig mit der Öffnung 112 des T-Stücks 110 zu liegen kommen. Im dargestellten Beispiel eines senkrechten T-Stücks beträgt der Drehwinkel 90°, aber andere Drehwinkel und Geometrien des T-Stücks mit demselben Grundgedanken sind vorstellbar.

Der Einbau erfolgt dann dadurch, dass der Einsatz über die Öffnung 112 eingeschoben wird und in der Rohrleitung in die Betriebsposition gedreht wird. In entsprechender Umkehrung erfolgt der Ausbau. Der Einsatz 20 ist also in gewisser Weise kugelförmig, was nicht bedeutet, dass er eine ideal kugelförmige Außenkontur hat, sondern lediglich zumindest Abschnitte aufweist, welche die oben beschriebene Drehung innerhalb der Rohrleitung ermöglichen. Der Einsatz bildet damit eine Analogie zur Kugel eines 3-Wege-Kugelhahns.

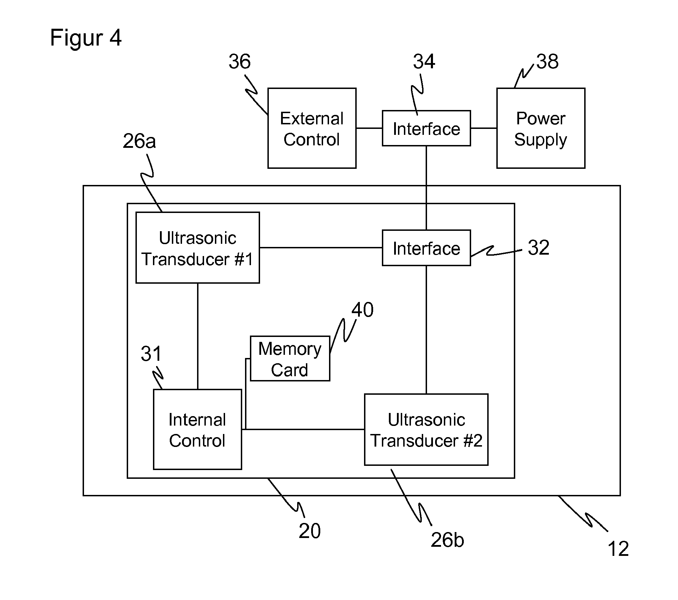

Es ist abweichend von der Darstellung der Figur 4 auch denkbar, dass statt des Einsatzes 20 selbst ein Einsatzgehäuse in dem T-Stück 110 montiert ist, welches drehbar gelagert ist und in der einen Drehposition den Einsatz 20 über die Öffnung 112 aufnimmt oder freigibt und in der anderen Drehposition den Einsatz 20 in der Betriebsposition hält, in der er von dem Fluid 14 durchströmt wird.

Durch ein ebenfalls nicht dargestelltes Absperrorgan in dem T-Stück 110 kann der Druck in der Leitung auch beim Austausch aufrecht erhalten werden. Alternativ bildet der Einsatz 20 oder dessen Einsatzgehäuse diese Absperrung. Damit kann der Austausch ohne Entlastung der Rohrleitung erfolgen, und die Notwendigkeit eines abschließenden Dichtigkeitstests entfällt.

Bei dieser Ausführungsform wird der verfügbare Raum optimal ausgenutzt. Zudem kann in Bereichen 44 radial außerhalb der Ultraschallwandler 26a, 26b die Auswertungs- und Ansteuerungselektronik sowie die Datenschnittstelle untergebracht werden.

Figur 4 zeigt in einem Blockschaltbild die internen elektronischen Komponenten des Messeinsatzes 20 sowie die Datenkommunikation nach extern. Dabei müssen die externen Komponenten sich nicht notwendig in örtlicher Nähe befinden, wie die Darstellung suggeriert.

Die beiden Ultraschallwandler 26a, 26b sind mit einer internen Steuerung 31 und über eine Schnittstelle 32, 34 mit einer externen Steuerung 36 und einer Energieversorgung 38 verbunden. Dabei können Aufgaben zwischen der internen Steuerung 31 und der externen Steuerung 36 je nach Ausführungsform unterschiedlich verteilt sein, um je nach Anwendung das Spektrum zwischen einem möglichst schlanken und energiesparenden Messeinsatz 20 oder im umgekehrten Extrem einem möglichst selbstständigen Messeinsatz 20 auszufüllen.

Die Steuerung 31, 36 steuert einerseits die Ultraschallwandler 26 an, um Laufzeiten und daraus Laufzeitdifferenzen zu ermitteln. Andererseits berechnet sie aus diesen Laufzeitunterschieden die Strömungsgeschwindigkeit des Fluids 14 und daraus mittels des bekannten Profils der Rohrleitung 12 beziehungsweise des Messeinsatzes 20 den Durchfluss. Auf diese Weise werden mittels der Steuerung 31, 36 Ultraschallsignale generiert, empfangen, ausgewertet und die Messwerte bereitgestellt. In einer bevorzugten Ausführungsform befindet sich die somit beschriebene Messelektronik vollständig auf dem Einsatz 20. In einer alternativen Ausführungsform wird nur Signalgenerierung und Empfang von der internen Steuerung 31 des Einsatzes 20 gesteuert, die Auswertung erfolgt jedoch außerhalb des Gehäuses in der externen Steuerung 36.

Die Schnittstelle 32, 34 kann eine einfache Drahtverbindung sein und nach einem beliebigen Standard Daten übertragen, beispielsweise einem proprietären Standard, als serielle Schnittstelle oder als Ethernet-Schnittstelle. Es genügt aber auch, eine einfache Stromschleife ohne Busprotokoll zur Übertragung vorzusehen.

In einer bevorzugten Ausführungsform ist die Schnittstelle 32, 34 drahtlos. Da dieses Übertragungsprinzip bei beliebigen Fluiden 14 mit gegebenenfalls signalverzerrenden Eigenschaften sowie auch bei dicken Rohrleitungen 12 funktionieren muss, die beständig gegen große Drücke sind, kann hier anwendungsspezifisch eine Reihe von Übertragungsprinzipien zum Einsatz kommen.

Darunter fallen erneut proprietäre oder standardisierte Übertragungen, die induktiv, optisch oder kapazitiv arbeiten. Eine weitere Übertragungsmethode basiert auf Funk, etwa nach einem bekannten Mobilfunkstandard, per WLAN oder Bluetooth. Bei diesem Übertragungsverfahren, besonders per Mobilfunk oder WLAN, kann die Schnittstelle 32, 34 die Daten auch zu einer weit entfernten Steuerungszentrale übertragen, von der aus eine Fernwartung möglich ist. Sowohl in einer solchen Steuerungszentrale wie auch unmittelbar am Ort der Messvorrichtung 10 können aktuelle oder kumulierte Strömungs- oder Durchflussdaten angezeigt oder zur Regelung der Durchflussmengen verwendet werden.

Alternativ oder zusätzlich zur Datenübertragung über die Schnittstelle 32, 34 kann ein Speicher 40 vorgesehen sein, insbesondere ein nichtflüchtiger Speicher, auf dem die Rohdaten der Ultraschallwandler und/oder die ausgewerteten Messdaten abgelegt werden. Wenn dieser Speicher 40 modular ausgebildet ist, also beispielsweise als SD-Karte oder dergleichen, kann er entnommen werden, um die protokollierten Daten zu Kontrollzwecken zu vergleichen oder, sofern eine Echtzeitüberwachung der Strömungsdaten nicht gefordert ist, jeweils nach Ablauf eines Betriebsintervalls ausgewertet werden.

Gemäß Darstellung der Figur 4 ist eine externe Energieversorgung 38 vorgesehen, welche den Messeinsatz 20 entweder über eine direkte Leitungsverbindung oder drahtlos versorgt, beispielsweise induktiv. Die Energieversorgung des Einsatzes 20 kann alternativ durch eine nicht dargestellte interne Batterie oder einen internen Akku erfolgen.

Sofern es die Signalstärke und die Energieversorgung zulässt, könnte die Schnittstelle auch nur aus der internen Schnittstelle 32 bestehen, welche unmittelbar Daten an eine örtlich getrennte Zentrale weitergibt, und somit den Einsatz 20 vollständig autark machen, so dass von außen überhaupt nicht ersichtlich ist, dass an dieser Stelle eine Messvorrichtung 10 vorgesehen ist. Dies macht einen Schutz der Messvorrichtung 10 vor Vandalismus oder Ausspähen der Daten überflüssig.

## Patentansprüche

1. Messvorrichtung (10) mit mindestens zwei in einer Rohrleitung (12), insbesondere in der Nähe der Wandung der Rohrleitung (12), derart angeordneten Ultraschallwandlern (26), dass im Betrieb der von den beiden Ultraschallwandlern (26) ausgesandte und empfangene Ultraschall eine von der Strömungsgeschwindigkeit und/oder dem Durchfluss eines in der Rohrleitung (12) strömenden Fluids (14) abhängige Laufzeitdifferenz aufweist,
**dadurch gekennzeichnet,**
**dass** die Ultraschallwandler (26) an einem Einsatz (20) vorgesehen sind, welcher in die Rohrleitung (12) in eine Betriebsposition einführbar und aus dieser entfernbar ist.

2. Messvorrichtung (10) nach Anspruch 1,
wobei ein gegen den Fluiddruck beständiges Gehäuse (12) als Abschnitt der Rohrleitung vorgesehen ist, welches dafür ausgebildet ist, den Einsatz (20) in der Betriebsposition zu halten, und wobei die Messvorrichtung (10) insbesondere einen mit dem Gehäuse (12) oder dem Einsatz (20) verbundenen Strömungsgleichrichter (30) aufweist.

3. Messvorrichtung (10) nach Anspruch 1 oder 2,
wobei eine Schaltwelle vorgesehen ist, mittels derer der Einsatz und/oder ein den Einsatz umgebendes Einsatzgehäuse drehbar in der Rohrleitung gelagert werden kann, und wobei der Einsatz durch Einbeziehung einer Drehung in die Betriebsposition einführbar und aus dieser entfernbar ist.

4. Messvorrichtung nach einem der vorhergehenden Ansprüche,
wobei das Gehäuse einen T-Stutzen aufweist und der Einsatz und/oder das Einsatzgehäuse an seiner Außenkontur Teile einer Kugelfläche aufweist oder im Wesentlichen kugelförmig ist.

5. Messvorrichtung nach Anspruch 4,
wobei der T-Stutzen ein Absperrorgan zum Halten des Drucks in der Rohrleitung bei geöffnetem T-Stutzen aufweist oder der Einsatz dafür ausgebildet ist, die Rohrleitung abzusperren.

6. Messvorrichtung (10) nach einem der vorhergehenden Ansprüche,
wobei ein insbesondere nichtflüchtiger Speicher (40) vorgesehen ist, um die Messdaten aufzuzeichnen, und wobei dieser Speicher (40) insbesondere als von außen austauschbares Modul ausgebildet ist.

7. Messvorrichtung nach einem der vorhergehenden Ansprüche,
wobei eine Schnittstelle (32, 34) vorgesehen ist, um Daten aus dem Einsatz (20) nach außen und/oder um Ansteuerungssignale zu den Ultraschallwandlern (26) zu führen, und wobei die Schnittstelle (32, 34) drahtgebunden, insbesondere eine serielle oder eine Ethernet-Schnittstelle, eine drahtlose Funkschnittstelle insbesondere nach einem Mobilfunkstandard, dem WLAN- oder Bluetooth-Standard, eine induktive, eine optische oder eine kapazitive Schnittstelle ist.

8. Messvorrichtung (10) nach einem der vorhergehenden Ansprüche,
wobei eine Auswertungseinheit (31, 36) vorgesehen ist, welche dafür ausgebildet ist, aus den Laufzeitdifferenzen die Strömungsgeschwindigkeit und/oder den Durchfluss des Fluids (14) zu ermitteln.

9. Messvorrichtung (10) nach Anspruch 8, wenn rückbezogen auf Anspruch 7, wobei der Einsatz (20) die Auswertungseinheit (31) aufweist und die Schnittstelle (32) dafür ausgebildet ist, Strömungsgeschwindigkeiten und/oder Durchflussdaten nach außen zu übertragen,
oder wobei die Auswertungseinheit (36) außerhalb der Rohrleitung (12) vorgesehen ist und die Schnittstelle (32, 34) dafür ausgebildet ist, Rohdaten der Ultraschallwandler (26) an die Auswertungseinheit (36) zu übertragen.

10. Messvorrichtung (10) nach einem der vorhergehenden Ansprüche,
wobei das Gehäuse (12) eine drahtlose, insbesondere induktive Stromversorgung (38) für den Einsatz (20) beziehungsweise dessen Ultraschallwandler (26), Schnittstelle (32) und/oder Auswertungseinheit (31) aufweist.

11. Verfahren zum Rekalibrieren eines Strömungsgeschwindigkeits- oder Durchflussmessers (10) für ein Fluid (14) in einer Rohrleitung (12) auf Ultraschallbasis, bei dem ein Messeinsatz (20) mit mindestens zwei Ultraschallzählern (26) außerhalb der Rohrleitung (12) kalibriert und anschließend der derart kalibrierte Messeinsatz (20) in die Rohrleitung (12) eingesetzt wird.

12. Verfahren nach Anspruch 11,
wobei der zu kalibrierende Messeinsatz (20) durch einen zweiten vorab außerhalb der Rohrleitung (12) kalibrierten Messeinsatz ausgetauscht wird.

13. Verfahren nach Anspruch 11 oder 12,
wobei der kalibrierte Messeinsatz (20) in axialer Richtung nach Ausbau eines Rohrleitungsabschnitts (12) oder mit radialer Richtungskomponente ohne Ausbau eines Rohrleitungsabschnitt über einen verschließbaren Stutzen (28) eingeführt wird.

14. Verfahren nach einem der Ansprüche 11 bis 13,
wobei der Einsatz über eine Schaltwelle durch Einbeziehung einer Drehung in die Betriebsposition entfernt, eingeführt und/oder ausgetauscht wird, wobei der Einsatz selbst drehbar gelagert ist oder in ein drehbar gelagertes Einsatzgehäuse des Rohrleitungsabschnitts eingesetzt wird.

15. Verfahren nach einem der Ansprüche 11 bis 14,
wobei der Austausch ohne Entlastung der Rohrleitung vorgenommen wird, indem der Einsatz oder ein Absperrorgan des Rohrleitungsabschnitts während des Austauschs den Druck aufrecht erhält.

16. Verfahren nach einem der Ansprüche 11 bis 15 zum Rekalibrieren einer Messvorrichtung (10) nach einem der Ansprüche 1 bis 10.
